# EUROPEAN PATENT APPLICATION

(11) **EP 1 868 088 A2**
(43) Date of publication of application: **19.12.2007**
(21) Application number: 07107409.0
(22) Date of filing: 03.05.2007
(51) Int. Cl.: G06F 9/445

(54) **Program update control apparatus**

(30) Priority: 13.06.2006 JP 2006163215
(71) Applicant: KONICA MINOLTA BUSINESS TECHNOLOGIES, INC., Tokyo 100-0005 (JP)
(72) Inventor: Kimoto, Tetsuo Konica Minolta Business Technologies, Inc., Tokyo 243-0025 (JP)
(74) Representative: Henkel, Feiler & Hänzel

(57) **Abstract**

There is described a program update control apparatus, which make it possible to determine an updating sequence and necessity or not of update operations for a plurality of programs, so as to appropriately control the update operations to be conducted in an external terminal apparatus, when updating the plurality of programs installed in the external terminal apparatus. The program update control apparatus includes: a receiving section to receive update instructions with respect to a plurality of programs; a storage section to store the update instructions with respect to the plurality of programs, received by the receiving section; a determining section to determine an updating sequence of the plurality of programs indicated by the update instructions, which are stored in the storage section; a controlling section to control program update operations to be conducted in an external terminal apparatus, according to the updating sequence determined by the determining section.

## Description

This application is based on Japanese Patent Application No. 2006-163215 filed on June 13, 2006 with Japan Patent Office, the entire content of which is hereby incorporated by reference.

### BACKGROUND OF THE INVENTION

The present invention relates to a program update control apparatus that conducts remote control operations for updating programs to be executed in external devices, and specifically relates to a technology for updating a plurality of programs while matching them with each other.

Sometimes, it becomes necessary for a certain apparatus, which is operated in the market on the basis of a program installed in it, to update the installed program for the purpose of debugging errors in the original program and/or adding new functions. On such occasions, a customer service engineer conventionally visits the site of the apparatus to perform the program update operation. Recently, however, such program update operations have generally been conducted by downloading a converted or new program from a server through a network.

Associating with the macro-scale trend of the program, sometimes, the program update operation to be conducted from the server requires several minutes to dozens of minutes. In addition, most of such apparatuses became unavailable for normal use during the program update operation. To overcome the above problems, Patent Documents 1 and 2 (Tokkai 2005-135147 and Tokkai 2004-185114, both being Japanese Non-Examined Patent Publications) set forth a program update system which makes it possible to reserve the time for executing the program update operation, so that program update operation is implemented when the user is not disturbed by the updating operation, for instance, during the night.

Further, in an apparatus having various kinds of functions, for instance, a digital multifunctional apparatus that is provided with a copy function, a scanner function, a printer function, a facsimile function, etc., various kinds of corresponding programs are installed by allotting them into plural groups classified into a functional category and a processing section category. Accordingly, if the operations for updating such the plural programs were conducted according to incorrect updating sequence of them, the apparatus would possibly work abnormally. For instance, when program update operations for optional peripheral devices have not been completed, sometimes those for the main apparatus cannot be conducted appropriately. To overcome the abovementioned problems, Patent Document 3 (Tokkai 2004-194298, Japanese Non-Examined Patent Publication) sets forth a program update method, in which the programs are updated in order of distance from the optional peripheral device being far from the main apparatus by determining the updating sequence of the programs at an apparatus into which the programs are downloaded, so that the correct updating sequence can be secured even when the program update is conducted by downloading the plurality of programs from the control server in a state that the customer service engineer is absent at the field concerned.

However, when the updating sequence of the programs is determined at an apparatus into which the programs are to be downloaded from the server, although it is possible to determine the updating sequence of the programs by employing a relatively simple rule, such as in order of distance being far from the main apparatus, etc., the processing burden of the apparatus would considerably increase in the case that complicated decisions based on various conditions are required. Further, when the updating sequence of the programs is determined at an apparatus into which the programs are to be downloaded from the server, it is difficult not only to acquire the latest information with respect to the points to be corrected in the programs concerned and/or correlation between specific programs, but also to cope with such information.

Still further, when a program that needs no updating or a program that does not match other programs is included in the programs to be downloaded, merely by determining the updating sequence of the plural programs, the program update operations would result in a waste of time or would cause functional abnormality of the apparatus concerned.

Yet further, even in an apparatus that makes it possible to reserve a specific time for updating the programs, if the updating times of plural programs are separately reserved, each of the program update operations is simply implemented at the time reserved in advance in order of time arriving at each of the reserved times. Accordingly, there has been a fear that unnecessary update operations are conducted, or the program update operations are implemented in a conflicting sequence.

### SUMMARY OF THE INVENTION

To overcome the abovementioned drawbacks in conventional color image forming apparatus, it is one of objects of the present invention to provide a program update control apparatus, which make it possible to determine an updating sequence and necessity or not of update operations for a plurality of programs, so as to appropriately control the update operations to be conducted in an external terminal apparatus, when updating the plurality of programs installed in the external terminal apparatus.

Accordingly, at least one of the objects of the present invention can be attained by the program update control apparatus described as follows.

(1) According to a program update control apparatus reflecting an aspect of the present invention, the program update control apparatus, comprises: a receiving section to receive update instructions with respect to a plurality of programs; a storage section to store the update instructions with respect to the plurality of programs, received by the receiving section; a determining section to determine an updating sequence of the plurality of programs indicated by the update instructions, which are stored in the storage section; a controlling section to control program update operations to be conducted in an external terminal apparatus, according to the updating sequence determined by the determining section.

According to the invention recited in the above, the program update control apparatus receives and stores the update instructions with respect to the plurality of programs transmitted from the portable terminal device of the customer service engineer, etc., and then, determines the updating sequence of the plurality of programs in regard to the update instructions stored, so as to control the program update operations (such as, a downloading operation, etc.) to be conducted in the external terminal apparatus according to the updating sequence of its determining result.

Since the program update control apparatus judges and determines the updating sequence of the plurality of programs to control the program update operations, the fundamental data for determining the updating sequence can be inputted only into the program update control apparatus. Accordingly, the determining operation on which the information provided from the manufacturer are reflected can be conducted more easily, compared to such the case in which the updating sequence is determined by an individual external terminal apparatus.

It is applicable that the update operations for the plurality of programs can be designated by either update instructions collectively transmitted at a time or update instructions separately transmitted and accumulated/stored in the storage device. Any kind of applicable method and theory can be employed as the determining method and theory. For instance, it is possible that control information indicating a priority order of update operations between programs are stored in advance, so as to determine on the basis of this control information.

(2) According to a program update control apparatus reflecting another aspect of the present invention, in the program update control apparatus recited in item 1, the determining section also determines necessity or not of an update operation for every one of the plurality of programs, so as to implement only the update operation determined as necessity.

According to the invention recited in the above, with respect to the plurality of programs designated by the update instructions, necessity or not of the update operation and the updating sequence are determined for every one of the plurality of programs. Although it is effective to determine necessity or not of the update operation at first, and then, to determine the updating sequence with respect to the program determined as necessity, it is also applicable that necessity or not of the update operation is determined after the updating sequence is determined. The operation for determining necessity or not of the update operation can be conducted on the basis of, for instance, relative relationships between the plural programs (new or old of its version, exclusive relationships) and information in regard to the external terminal apparatus (updating histories of the programs, system configurations, etc.).

(3) According to a program update control apparatus reflecting still another aspect of the present invention, the program update control apparatus recited in item 1, further comprises: a grouping section to group the plurality of programs indicated by the update instructions, which are stored in the storage section, under a predetermined standard; wherein the determining section determines an updating sequence of a plurality of programs included in a specific group grouped by the grouping section.

According to the invention recited in the above, for instance, the update instructions of the programs are received plural times within a short time period and accumulated/stored in the storage device. The grouping section groups these plural update instructions under the predetermined standard. For instance, there can be employed such the grouping methods of: grouping update instructions received by a prescribed time of everyday into a single group; grouping update instructions received until a prescribed time interval has elapsed from the time when an initial update instruction was received, into a single group; grouping update instructions received before a prescribed time interval has elapsed from the time when a latest update instruction was received, into a single group, when a next update instruction is not received until the prescribed time interval has elapsed; etc. The determining section determines the updating sequence of the plurality of programs included in each group.

(4) According to a program update control apparatus reflecting still another aspect of the present invention, in the program update control apparatus recited in item 3, the determining section also determines necessity or not of an update operation for every one of the plurality of programs included in the specific group, so as to implement only the update operation determined as necessity.

According to the invention recited in the above, the update instructions of the programs are grouped, so as to determine the updating sequence and necessity or not of the update operation with respect to each of the programs.

(5) According to a program update control apparatus reflecting still another aspect of the present invention, in the program update control apparatus recited in item 3, the controlling section acquires a program, being an object of update operation, from an external program server, which stores various kinds of programs to be installed in the external terminal apparatus.

According to the invention recited in the above, the program update control apparatus acquires the program from the external program server separately equipped, to update the program of the external terminal apparatus by employing the program concerned.

(6) According to a program update control apparatus reflecting still another aspect of the present invention, in the program update control apparatus recited in item 1, the controlling section commences the program update operations at a predetermined timing.

According to the invention recited in the above, even when the controlling section receives program update instructions, the controlling section does not commence the program update operations immediately, but implements them at the time when the predetermined timing arrives. It is applicable that the predetermined timing is set at either a specific time, such as 12 O'clock in midnight, etc., or any other timing at which a specific condition is fulfilled, such as a time when all of the update instructions in regard to the related programs arrive, etc. It is also applicable that the predetermined timing is set by the program update control apparatus side, or designated by the client who requests the program update, or designated by the external terminal apparatus serving as an update destination apparatus.

(7) According to a program update control apparatus reflecting still another aspect of the present invention, the program update control apparatus recited in item 6, further comprises: a data acquisition section to acquire data in regard to a program update timing from the external terminal apparatus; wherein the predetermined timing is determined, based on the data in regard to the program update timing, acquired by the data acquisition section.

According to the invention recited in the above, the program update control apparatus acquires data in regard to the program update timing from the external terminal apparatus serving as an update destination apparatus, so as to implement the program update operations at the time when the update timing designated by the data arrives. Accordingly, it becomes possible to implement the program update operations at the timing corresponding to the convenience of the external terminal apparatus side. It is applicable that the data in regard to the timing of implementing the program update operations is acquired in advance and stored in the program update control apparatus, so as to control the arrival of the update timing in the program update control apparatus side, or the external terminal apparatus notifies the program update control apparatus of the arrival of the update timing when it arrives.

(8) According to a program update control apparatus reflecting still another aspect of the present invention, in the program update control apparatus recited in item 7, the data in regard to the program update timing represent an unavailable time period of the external terminal apparatus, serving as a spare time of the external terminal apparatus.

According to the invention recited in the above, the time period, during which the external terminal apparatus is not used, is designated as the timing for implementing the program update operations.

(9) According to a program update control apparatus reflecting still another aspect of the present invention, in the program update control apparatus recited in item 1, the update instructions to be received by the receiving section are transmitted from an external terminal device other than the external terminal apparatus in which the program update operations are to be conducted.

According to the invention recited in the above, the program update instructions are transmitted from, for instance, a portable terminal device of the customer service engineer to the program update control apparatus.

(10) According to a program update control apparatus reflecting yet another aspect of the present invention, in the program update control apparatus recited in item 1, the controlling section collectively implements the program update operations to be conducted in the external terminal apparatus.

According to the invention recited in the above, with respect to the plurality of programs designated by the update instructions, the program update control apparatus determines updating sequence and necessity or not of the update operations, and then, when the predetermined timing arrives, controls the external terminal apparatus so that the update operations for the programs determined as necessity are correctively (continuously) implemented according to the determined updating sequence. For instance, the plural programs are correctively and continuously updated, during the time period in which the external terminal apparatus is not used.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig- 1 shows an exemplified configuration of a program update system that includes a control server serving as a program update control apparatus embodied in the present invention;
Fig. 2 shows a rough functional configuration of a control server embodied in the present invention;
Fig. 3 shows an example of a control information table to be stored in a control information storing section of a control server;
Fig. 4 shows a flowchart of program update operations to be implemented in a program update system;
Fig. 5 shows a flowchart of a concretely example of program update operations to be implemented in a program update system;
Fig. 6(a) shows an example of an update instruction accumulating table to be stored in a storage section of a control server;
Fig. 6(b) shows an example of an update control table to be stored in a storage section of a control server; and
Fig. 7 shows an explanatory schematic diagram of a program update system in which a control server and a program server are integrated into a single apparatus.

### DETAILED DESCRIPTION OF THE PREFERRED EMBODIMENT

Referring to the drawings, the preferred embodiment of the present invention will be detailed in the following.

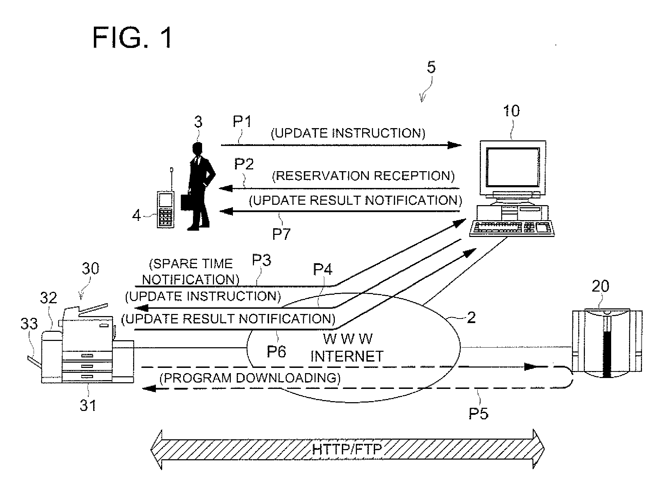

Fig. 1 shows an exemplified configuration of a program update system 5 that includes a control server 10 serving as a program update control apparatus embodied in the present invention. The program update system 5 is constituted by the control server 10 for controlling program update operations, a program server 20 for accumulating and storing programs in it, an image forming apparatus 30 serving as an external terminal device being a program update destination device, a designation terminal device 4 for transmitting instructions of the program update operations to the control server 10 and a network, such as an Internet 2 or the like, through which the abovementioned systems and/or devices are coupled to each other.

The program update system 5 serves as a system that allows an updating operator 3, such as a customer service engineer, etc., who conducts maintenance, trouble shooting and controlling operations of the image forming apparatus 30, to remotely update the program installed in the image forming apparatus 30 by using the designation terminal device 4, such as a cellular phone, a portable terminal device, or a computer located at a sales site.

In the program update system 5, it is assumed that the program update instructions are repeatedly transmitted from the designation terminal device 4 of the updating operator 3 for plural times within a short time period. Accordingly, the control server 10 stores and accumulates the received program update instructions in it until a next update timing arrives, without immediately implementing the update operation corresponding to the program update instruction just received. Then, when the next update timing has arrived, the control server 10 totally determines whether or not the update operations, with respect to the plural program update instructions received so far, are necessary, the order of updating operations, etc., so as to optimize the contents of the update instructions, and after that, implements the program update operations.

The designation terminal device 4 is provided with functions such as accepting the inputting operations of the program update instructions conducted by the updating operator 3, transmitting the program update instructions to the control server 10 in response to the inputting operations mentioned in the above, and receiving and displaying the notification of the updating results sent from the control server 10. The program update instructions and the notification of the updating results are bilaterally communicated through E-mail or a web page provided by the control server 10.

The program server 20 is provided with functions such as storing various kinds of programs, and downloading a stored program to the image forming apparatus 30 in response to a request for downloading.

The image forming apparatus 30 serves as a digital multifunctional apparatus that is provided with a copy function, a scanner function, a printer function, a facsimile function, etc., and includes optional apparatuses coupled to an main image forming apparatus 31, such as an automatic document feeder (ADF, Automatic Document Feeder) 32, a finisher (FNS, FiNiSher) 33, etc. The main image forming apparatus 31 is constituted by a scanner section for reading a document image, a printing section for printing a reproduced image on a recording paper, a display operating section serving as an interface section with the user, a communication section for communicating with various kinds of apparatuses coupled through the Internet 2, a storage section for storing digital image data, etc.

Further, the main image forming apparatus 31 is provided with a CPU (Central Processing Unit) serving as a control section (not shown in the drawings), and a rewritable and nonvolatile storage, such as a flash memory, etc., to store plural kinds of programs for controlling the operations to be conducted in the image forming apparatus 30. Concretely speaking, the plural kinds of programs, corresponding to the apparatus configuration, the mounting status of the optional apparatuses, etc., for instance, a main program for controlling the overall operations of the image forming apparatus 30, an ADF controlling program for controlling the automatic document feeder 32, a FNS controlling program for controlling the finisher 33, etc., are stored.

Still further, the image forming apparatus 30 is provided with such a function of downloading a concerned program from the program server 20 in response to an instruction sent from the control server 10, in order to update the program stored in it. From the security point of view, the image forming apparatus 30 accepts only the update instruction sent from the control server 10, which is already registered. In addition, the image forming apparatus 30 is provided with a polling function for confirming presence or absence of the update instruction addressed to itself with the control server 10 already registered.

The control server 10 transmits an update instruction in a unit of individual program. After receiving the update instruction, the image forming apparatus 30 updates the concerned program downloaded from the program server 20 according to the update instruction received, and then, notifies the control server 10 of the completion of update operation (namely, the updating result) so as to urge the transmission of the next update instruction. When continuously updating the plural programs, the abovementioned operations are repeated for plural times.

Still further, the image forming apparatus 30 is provided with a function of notifying the control server 10 of timing for updating the program. In this embodiment, the control server 10 is notified of a time period during which the user does not use the image forming apparatus 30 (namely, an unavailable time period). It is applicable that the control server 10 is notified of timing for updating the program at, for instance, the time when a sub-power source of the image forming apparatus 30 is turned OFF, the time when a time set by a weekly timer for reserving a deactivate period of the apparatus enters into the OFF time period, the time when the sub-power source of the image forming apparatus 30 is automatically turned OFF (power-saving mode) due to unused state of the apparatus for a predetermined time period, etc. In other words, the image forming apparatus 30 regards the time period, from the time when the power source of the apparatus is turned OFF under any one of the abovementioned conditions to the next time when the power source of the apparatus is again turned ON, as the unavailable time period during which the user does not use the image forming apparatus 30, and notifies the control server 10 of the unavailable time period as the timing for updating the program.

Yet further, when the user sets the weekly timer so that the apparatus power source is turned ON at 10:00 a.m. while turned OFF at 21:00 p.m. in everyday from Monday to Friday, since time periods from 21:00 p.m. to 10:00 a.m. of next morning from Monday to Friday and other time periods through the day and night in Saturday and Sunday can be regarded as the unavailable time period of the user, the image forming apparatus 30 notifies the control server 10 of such the setting information of the weekly timer as information indicating the unavailable time period concerned. Receiving the abovementioned notification from the image forming apparatus 30, the control server 10 implements the program update operations with respect to the image forming apparatus 30 at the timing of the unavailable time period notified from the apparatus concerned.

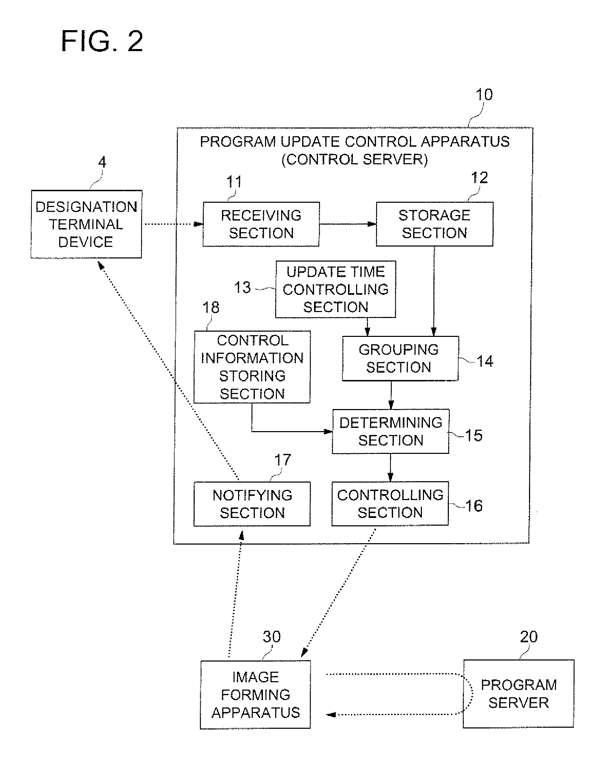

Fig. 2 shows a rough functional configuration of the control server 10. The control server 10 is provided with a receiving section 11 for receiving the update instruction of the program from the designation terminal device 4, a storage section 12 for storing the update instructions with respect to a plurality of programs received by the receiving section 11, an update time controlling section 13 for controlling the timing of the program update operations, a grouping section 14 for grouping the plural programs stored in the storage section 12 and designated by the update instructions, a determining section 15 for determining whether or not the update operations are necessary and for determining the updating sequence, with respect to programs included in a single group, a controlling section 16 for controlling the update operations of the programs installed in the image forming apparatus 30 according to the results determined by the determining section 15, a notifying section 17 for notifying the results of the update operations to the designation terminal device 4, etc. A personal computer, provided with a CPU (Central Processing Unit), a ROM (Read Only Memory), a RAM (Random Access Memory), an input/output interface section, a communicating section, a storage section, etc., can be employed as the control server 10 provided with the functional sections mentioned in the above.

The control server 10 is further provided with a control information storing section 18 that stores control information serving as fundamental data for determining whether or not update operations are necessary and for determining an order of updating the programs concerned. In the control information storing section 18, the control information provided from the manufacturer of the image forming apparatus 30 are updated as needed so as to keep them in a newest state. The determining section 15 determines whether or not update operations are necessary and the updating sequence, not only based on the control information stored in the control information storing section 18, but also based on the apparatus information (for instance, a type and a system configuration of the apparatus concerned, version information with respect to the current program) to be acquired from the image forming apparatus 30. Incidentally, it is also applicable that the control information storing section 18 is configured as a part of the storage section 12.

The update time controlling section 13, serving as such a functional section that is functioned by executing a program retrieved from the programs stored in the ROM and temporally stored into the RAM by the CPU, conducts a notifying operation of the update timing (the unavailable time period by the weekly timer, etc.) received from the image forming apparatus 30, and determines the time for updating the program, based on the day and time established in its own apparatus and the current status of receiving the update instructions.

The grouping section 14, serving as such a functional section that is functioned by executing a program retrieved from the programs stored in the ROM and temporally stored into the RAM by the CPU, conducts the grouping operations by employing the methods of grouping update instructions, received by a prescribed time (for instance, 10 o'clock at night) of everyday, into a single group; grouping update instructions, received until a prescribed time interval (for instance, five hours) has elapsed from the time when an initial update instruction was received, into a single group; grouping update instructions, received before a prescribed time interval (for instance, two hours) has elapsed from the time when a latest update instruction was received, into a single group, when a next update instruction with respect to the same image forming apparatus 30 is not received until the prescribed time interval has elapsed; etc. Namely, the grouping section 14 achieves such the functions for accumulating the update instructions and for grouping them into a single group on the basis of a certain prescribed standard.

Incidentally, the scope of the grouping method is not limited to the abovementioned methods. Further, the program update system 5 is so constituted that settings of the grouping method are changeable according to the controlling actions of the control server 10 and the instructions outputted from the designation terminal device 4. Still further, it is also applicable that a group number, etc. can be designated in the update instruction to be transmitted from the designation terminal device 4, so as to group update instructions having the same group number into a specific group.

Further, the grouping operation, the operations for determining whether or not update operations are necessary and the updating sequence, and the implementation of the program update operation to be conducted by the controlling section 16 according to the determining result, may be conducted either at a time or at separate times, respectively. For instance, it is applicable that the program update system 5 is so constituted that, when the image forming apparatus 30 notifies the control server 10 of the update timing, the update instructions with respect to the image forming apparatus 30 concerned, accumulated so far in the storage section 12, are grouped into a specific group, and then, with respect to the update instruction included in the specific group, the determining section 15 determines whether or not update operations are necessary and the updating sequence, to control the program update operations according to the determining results made in the above.

The controlling section 16, serving as such a functional section that is functioned by executing a program retrieved from the programs stored in the ROM and temporally stored into the RAM by the CPU, continuously implements the program update operations with respect to a plurality of programs belonging to a single group as one lump package. Concretely speaking, the update operations of the plurality of programs are collectively implemented by continuously repeating the operations for transmitting an update instruction of one program to the image forming apparatus 30 and transmitting another update instruction of next program to the image forming apparatus 30, when receiving the notification of completing the update operation of the current program from the image forming apparatus 30, up to the number of the programs concerned. Each of the receiving section 11 and the notifying section 17 serves as such a functional sections that is functioned by executing a program retrieved from the programs stored in the ROM and temporally stored into the RAM by the CPU.

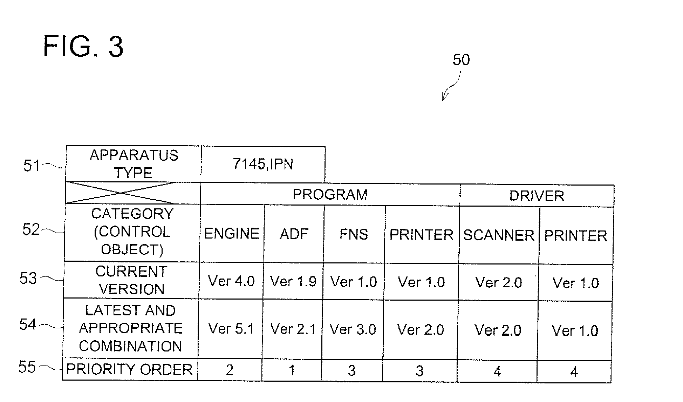

Fig. 3 shows an example of a control information table 50 to be stored in the control information storing section 18. In the control information table 50, the control information, in which apparatus type information 51, category information 52 in regard to programs and drivers to be employed in the apparatus type concerned, a current version 53 of each program, information 54 indicating a rule for the latest and appropriate combination of a program and a driver among them mentioned in the above, are correlated with each other, are stored for every apparatus type. Fig. 3 indicates the control information table 50 for a single apparatus type.

Each priority order indicated in the control information table 50 shown in Fig. 3 is established on the basis of such a rule that "a priority order of the second program, which influences the operations of the first program, overrides a priority order of the first program". For instance, since the operations of the automatic document feeder (ADF) 32 influence the operations of the engine and the operations of the engine influence the operations of the finisher (FNS) 33, the priority orders of them are established in order of the ADF (1) > the engine (2) > the FNS (3), wherein symbol ">" indicates a term of " being higher than". Further, since the statuses of the apparatuses concerned, such as the engine, the ADF, the FNS, etc., tend to influence the operations and settings of the drivers for them, the priority order of each driver program is set at a level lower than those of the other programs.

Incidentally, the current version 53 of each program is not registered in advance, but is acquired from the image forming apparatus 30 to be an update destination apparatus, at the time when implementing the program update operations, etc.

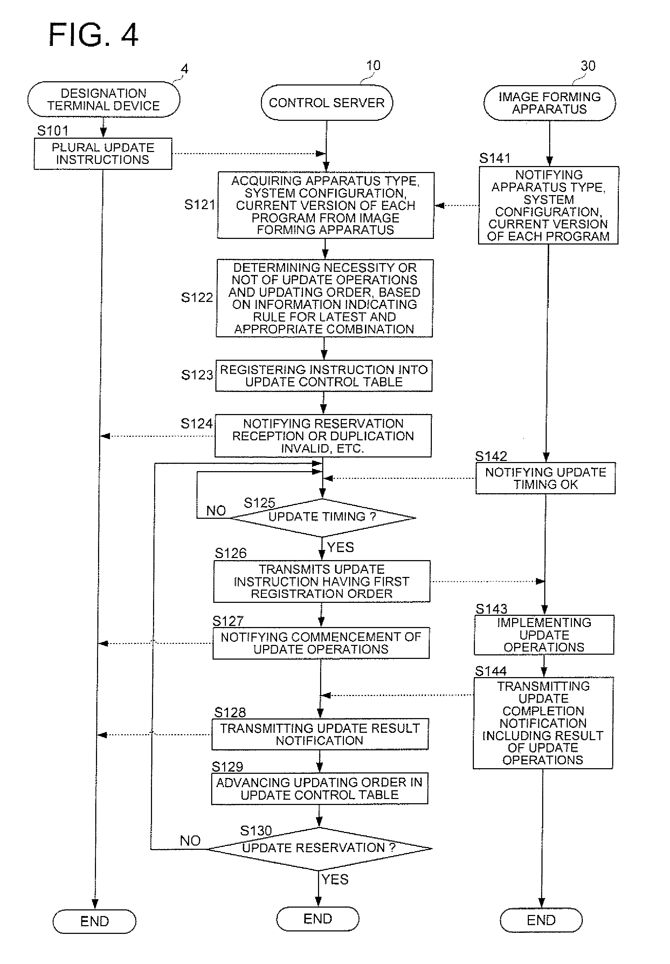

Fig. 4 shows a flowchart of the program update operations to be implemented in the program update system 5. In addition, Fig. 1 roughly shows data flows when implementing the flowchart shown in Fig. 4. At first, the updating operator 3 operates the designation terminal device 4 to transmit the update instructions with respect to a plurality of programs. Then, the control server 10 receives the update instructions sent from the designation terminal device 4 (Step S101 shown in Fig. 4; Arrow P1 shown in Fig. 1). The update instructions with respect to the plurality of programs may be separately transmitted one by one within a short time period, or collectively transmitted at a time. The update instructions with respect to the plurality of programs are grouped on the basis of such the standard as aforementioned. The control server 10 acquires information indicating the apparatus type, the system configuration, the current version of each program, etc., (Step S121 and Step S141).

Next, referring to the control information table 50 stored in the control information storing section 18, the determining section 15 of the control server 10 retrieves the control information in regard to the concerned apparatus type from it. Successively, with respect to plural programs included in the group, the determining section 15 determines whether or not update operations are necessary and the updating sequence, based on the information 54 indicating the rule for the latest and appropriate combination of the retrieved control information, etc., (Step S122), and registers the determining results into the update control table (Step S123).

For instance, when plural update instructions are duplicated on a single program, the determining section 15 makes only one of them effective by deleting the other update instructions. Further, when plural update instructions for both a new version program and an old version program are duplicated on the same controlling object, for instance, the determining section 15 determines that update operations for the new version program are necessary, while those for the old version program are unnecessary. On the other hand, if there are established update conditions such that it is impossible to update a current program to the new version program unless the current program is once updated to the old version program, the determining section 15 determines whether or not update operations are necessary and the updating sequence according to such the update conditions. For instance, it is determined that the updating sequence is in order from the old version to the new version. An updating reservation of the program determined to be updated is accepted, and the update instructions with respect to the concerned program are registered into the update control table in order from one having the first updating sequence.

After that, the control server 10 transmits a reception result notification, indicating a fact that the update instruction was accepted and reserved, a fact that the update instruction has been deleted due to duplication of them, etc., to the designation terminal device 4 (Step S124; Arrow P2 shown in Fig. 1).

Still after that, due to an arrival of the unavailable time period in the image forming apparatus 30, etc., when the image forming apparatus 30 notifies the control server 10 of the update timing (Step S125 and Step S142; Arrow P3 shown in Fig. 1), the control server 10 transmits the update instruction having the first registration order to the image forming apparatus 30 (Step S126; Arrow P4 shown in Fig. 1), and at the same time, notifies the designation terminal device 4 of the commencement of the update operations (Step S127).

According to the update instructions received from the control server 10, the image forming apparatus 30 downloads the program from the program server 20, in order to implement the update operations of the program concerned (Step S143; Arrow P5 shown in Fig. 1). When the update operations are completed, the image forming apparatus 30 transmits an update completion notification including a result of the update operations, such as success or failure of the update operations, etc., (Step S144; Arrow P6 shown in Fig. 1).

Receiving the update completion notification sent from the image forming apparatus 30, the control server 10 transmits the update result notification corresponding to the above to the designation terminal device 4 (Step S128; Arrow P7 shown in Fig. 1). Then, by advancing the updating sequence in the update control table by one (Step S129), the control server 10 investigates whether or not a next update instruction exists on the update control table (Step S130). When determining that the next update instruction exists (Step S130; No), the control server 10 returns to Step S125 in order to control the update operations with respect to the next update instruction. When determining that the next update instruction does not exist (Step S130; Yes), the control server 10 finalizes the update processing (END).

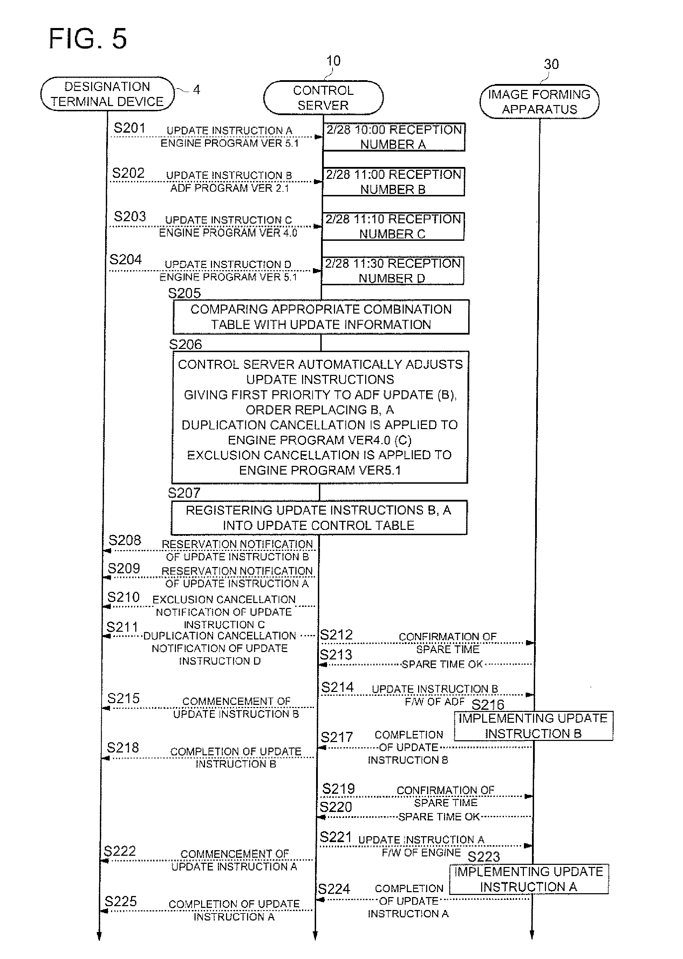

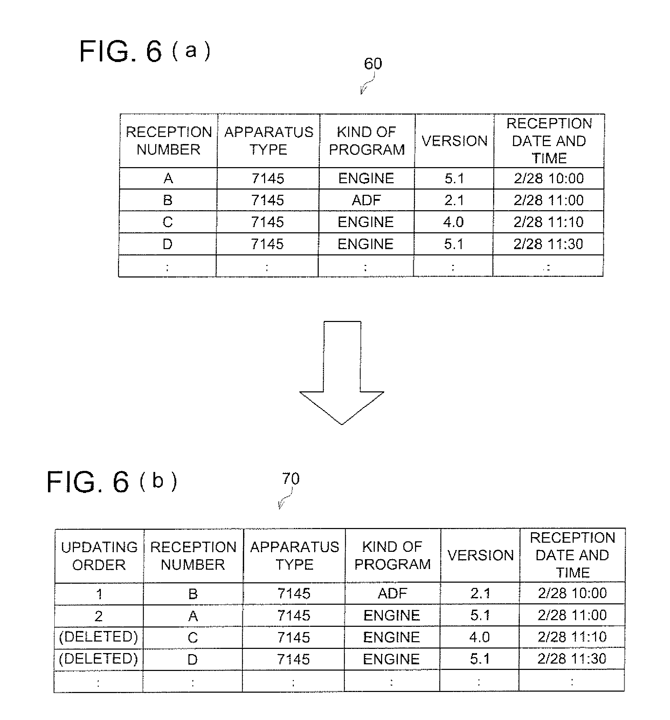

Next, referring to Fig. 5, Fig. 6(a) and Fig. 6(b), a concrete example, in which the control server 10 receives plural update instructions A, B, C and D, will be detailed in the following. As shown in Fig. 5, the control server 10 receives the update instruction A (reception date and time: February 28, 10:00, update content: Engine program Ver5.1), the update instruction B (reception date and time: February 28, 11:00, update content: ADF program Ver2.1), the update instruction C (reception date and time: February 28, 11:10, update content: Engine program Ver4.0) and the update instruction D (reception date and time: February 28, 11:30, update content: Engine program Ver5.1) one by one in the above-indicated order from the designation terminal device 4 (Steps S201 through S204 shown in Fig. 5). Fig. 6(a) shows an example of an update instruction accumulating table 60 to be stored in the storage section 12 of the control server 10. The update instructions A, B, C and D are stored in the control information storing section 18 in order of receiving them.

With respect to the four update instructions stored in the update instruction accumulating table 60, the determining section 15 determines whether or not update operations are necessary and the updating sequence, based on the standard indicated by the control information table 50 shown in Fig. 3 (Steps S205 through S207 shown in Fig. 5). In this example, the highest priority is given to the update instruction B (ADF program Ver2.1) whose priority order in the control information table 50 shown in Fig. 3 is the first place. Further, since the update contents of the update instruction A and the update instruction D are duplicated with each other, any one of them (herein, the update instruction D) is deleted (namely, Duplication cancellation). Still further, since the update instruction C (Engine program Ver4.0) becomes unnecessary if the update instruction A (Engine program Ver5.1) is implemented, the update instruction C (Engine program Ver4.0) is deleted (namely, Exclusion cancellation).

Fig. 6(b) shows an update control table 70 created on the basis of the determining results mentioned in the above. As shown in Fig. 6(b), the updating sequences of the update instruction B (reception date and time: February 28, 11:00) and the update instruction A (reception date and time: February 28, 10:00) are replaced with each other in the update control table 70. Further, the update instruction C and the update instruction D are deleted, as a result of determining that both of them are unnecessary.

After the update control table 70 is created, the control server 10 notifies the designation terminal device 4 of the completion of receptions and reservations with respect to the update instruction A and update instruction B (Step S208, Step 5209), the Exclusion cancellation with respect to the update instruction C and the Duplication cancellation with respect to the update instruction D (Step S211).

Next, the control server 10 confirms whether or not the image forming apparatus 30 currently enters into the unavailable time period during which the user does not use the apparatus (Step S212). When determining that the image forming apparatus 30 currently enters into the unavailable time period (namely, Spare time OK, Step S213), the control server 10 controls the program update operations according to the update control table 70.

Concretely speaking, initially, the control server 10 transmits the update instruction B registered in the leading area of the update control table 70 to the image forming apparatus 30 (Step S214), and then, notifies the designation terminal device 4 of the commencement of the update operations in regard to the update instruction B (Step S215). In response to the update instruction B sent from the control server 10, the image forming apparatus 30 downloads a program from the program server 20 to complete the update operations of the program concerned (Step S216), and then, notifies the control server 10 of the completion of the update operations with respect to the update instruction B (Step S217). The control server 10 serves as a repeater to further transmit the update completion notification received from the image forming apparatus 30 to the designation terminal device 4 (Step S218).

Successively, according to the same procedure mentioned in the above, the control server 10 implements the update operations with respect to the update instruction A (Steps S219 through S225) . As a result, the program update operations with respect to the update instructions A, B, C and D received from the designation terminal device 4 are completed and finalized.

As mentioned in the foregoing, since the control server 10 receives a plurality of update instructions from the designation terminal device 4 of the customer service engineer, and determines an appropriate updating sequence and necessity or not of its update operations (such as the Duplication cancellation, the Exclusion cancellation, etc.) with respect to the plural programs designated by the received update instructions, so as to control the program update operations to be implemented in the image forming apparatus 30 according to the abovementioned determining results, it becomes possible to update the plural programs in the appropriate updating sequence, and as a result, it becomes possible to prevent the apparatus form entering into a malfunctioned state due to the erroneous update operations caused by an inappropriate updating sequence.

Further, since the control server 10 itself determines the updating sequence and the necessity or not of its update operations, it becomes possible to reflects latest information provided from the manufacturer of the apparatus onto the fundamental data (namely, control information table 50) speedily and in detail, and as a result, it becomes possible to appropriately control the program update operations of plural programs based on the latest information, compared to such the case that each image forming apparatus 30 individually determines the updating sequence and the necessity or not of its update operations.

Still further, since the program update operations are implemented during the unavailable time period in which the user does not use the image forming apparatus 30, it becomes possible to complete the program update operations without disturbing the usage of the user.

Referring to the drawings, the preferred embodiment of the present invention has been described in the foregoing. However, the scope of the present invention is not limited to the aforementioned embodiment. Any modifications and additions applied to the disclosed embodiment without departing from the spirit and scope of the invention shall be included in the scope of the present invention.

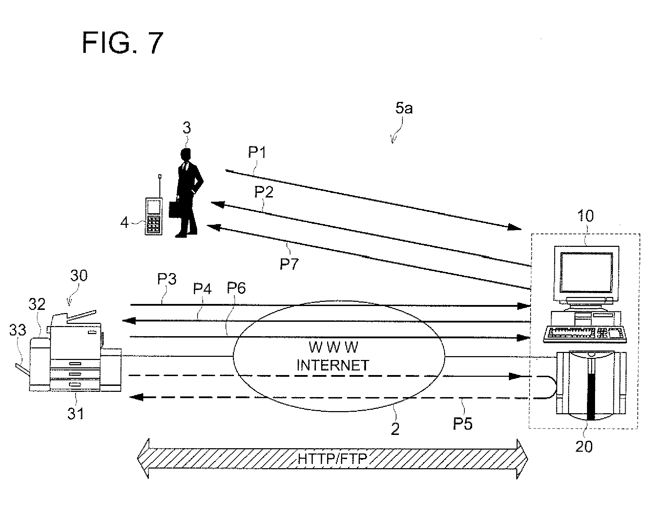

For instance, it is also applicable in the present invention that the control server 10 and the program server 20 are integrally configured as a single apparatus, as shown in Fig. 7.

Further, the time for implementing the program update operations is not limited to the aforementioned unavailable time period of the image forming apparatus 30. It is also possible to implement the program update operations at an update timing determined by the control server 10 or at an appropriate timing determined on the basis of other conditions as needed.

Still further, it is applicable that the system is so constituted that the priority order and/or the instantaneous implementation for update instruction can be designated in the update instructions to be transmitted from the designation terminal device 4. Receiving the update instruction including the instantaneous implementation, the control server 10 could instantaneously implement the update instruction concerned by itself (in case of currently conducting another update operation, implements the update instruction concerned after completion of the other update operation), or could determine the updating sequence and the necessity or not of its update operations in relation to other update instructions previously received so as to instantaneously implement the update operations according to the determining result.

Still further, it is applicable that the system is so constituted that a plurality of image forming apparatuses 30 can be designated as an update destination apparatus by a single update instruction to be transmitted from the designation terminal device 4. In this case, the updating sequence and the necessity or not of its update operations are determined for every image forming apparatus 30 being the update destination apparatus.

Other than the above, it is also applicable that the system is so constituted that the designation terminal device 4 can inquire the updating sequence from the control server 10 to confirm the contents of the updating sequence, and/or can forcibly change the updating sequence.

Although the image forming apparatus 30 is exemplified as an external apparatus at the update destination site in the embodiment described in the foregoing, any other kind of apparatus could be possibly regarded as such the external apparatus, as far as a plurality of programs are installed in the apparatus and are updatable.

According to the program update control apparatus embodied in the present invention, since the program update control apparatus receives update instructions with respect to a plurality of programs from the portable terminal device of the customer service engineer etc., and determines the updating sequence of the programs designated by the update instructions concerned, so as to control the program update operations to be conducted in the external terminal apparatus according to the determined updating sequence, it becomes possible not only to update the plurality of programs in an appropriate updating sequence determined in the program update control apparatus itself, but also to prevent the external terminal apparatus, serving as an update destination apparatus, from exhibiting abnormal actions caused by an inappropriate updating sequence of the programs.

Further, since the updating sequence, etc. are determined in the program update control apparatus side, the fundamental data for the above determining operation should be updated only in the program update control apparatus. Accordingly, it becomes possible to reflects latest information provided from the manufacturer of the apparatus onto the fundamental data speedily and in detail, and as a result, it becomes possible to appropriately control the program update operations of plural programs based on the latest information, compared to such the case that each external terminal apparatus individually determines the updating sequence and the necessity or not of its update operations.

Still further, since necessity or not of update operations of each program is determined, it becomes possible to prevent duplicated update operations for the same program, wasted update operations for both new and old versions, erroneous program update operations due to an unmatched combination of programs, which would cause abnormal actions, etc.

Yet further, since the update operations are implemented during the time period in which the external terminal apparatus is not used, it becomes possible to update the programs without disturbing the usage of the external terminal apparatus conducted by the user.

While the preferred embodiments of the present invention have been described using specific term, such description is for illustrative purpose only, and it is to be understood that changes and variations may be made without departing from the spirit and scope of the appended claims.

## Claims

1. A program update control apparatus, **characterized by** comprising:
a receiving section to receive update instructions with respect to a plurality of programs;
a storage section to store the update instructions with respect to the plurality of programs, received by the receiving section;
a determining section to determine an updating sequence of the plurality of programs indicated by the update instructions, which are stored in the storage section;
a controlling section to control program update operations to be conducted in an external terminal apparatus, according to the updating sequence determined by the determining section.

2. The program update control apparatus recited in claim 1, **characterized in that**
the determining section also determines necessity or not of an update operation for every one of the plurality of programs, so as to implement only the update operation determined as necessity.

3. The program update control apparatus recited in claim 1, **characterized by** further comprising:
a grouping section to group the plurality of programs indicated by the update instructions, which are stored in the storage section, under a predetermined standard;
wherein the determining section determines an updating sequence of a plurality of programs included in a specific group grouped by the grouping section.

4. The program update control apparatus recited in claim 3, **characterized in that**
the determining section also determines necessity or not of an update operation for every one of the plurality of programs included in the specific group, so as to implement only the update operation determined as necessity.

5. The program update control apparatus recited in any one of claims 1 - 4, **characterized in that**
the controlling section acquires a program, being an object of update operation, from an external program server, which stores various kinds of programs to be installed in the external terminal apparatus.

6. The program update control apparatus recited in any one of claims 1 - 5, **characterized in that**
the controlling section commences the program update operations at a predetermined timing.

7. The program update control apparatus recited in claim 6, **characterized by** further comprising:
a data acquisition section to acquire data in regard to a program update timing from the external terminal apparatus;
wherein the predetermined timing is determined, based on the data in regard to the program update timing, acquired by the data acquisition section.

8. The program update control apparatus recited in claim 7, **characterized in that**
the data in regard to the program update timing represent an unavailable time period of the external terminal apparatus, serving as a spare time of the external terminal apparatus.

9. The program update control apparatus recited in any one of claims 1 - 8, **characterized in that**
the update instructions to be received by the receiving section are transmitted from an external terminal device other than the external terminal apparatus in which the program update operations are to be conducted.

10. The program update control apparatus recited in any one of claims 1 - 10, **characterized in that**
the controlling section collectively implements the program update operations to be conducted in the external terminal apparatus.

11. A program update system, comprising:
an image forming apparatus in which a plurality of programs to be executed in the image forming apparatus are installed;
a program update control apparatus to control program update operations to be conducted in the image forming apparatus;
a designation terminal device to transmits update instructions for updating the plurality of programs, installed in the image forming apparatus, to the program update control apparatus;
a program server to store various kinds of programs to be downloaded into the image forming apparatus, in response to a request of downloading received from the image forming apparatus or the program update control apparatus; and
a network through which the image forming apparatus, the program update control apparatus, the designation terminal device and the program server communicate with each other; and
**characterized in that** the program update control apparatus includes:
a receiving section to receive the update instructions with respect to the plurality of programs;
a storage section to store the update instructions with respect to the plurality of programs, received by the receiving section;
a determining section to determine an updating sequence of the plurality of programs indicated by the update instructions, which are stored in the storage section;
a controlling section to control program update operations to be conducted in the image forming apparatus, according to the updating sequence determined by the determining section.

12. The program update system recited in claim 11, **characterized in that**
the determining section also determines necessity or not of an update operation for every one of the plurality of programs, so as to implement only the update operation determined as necessity.

13. The program update system recited in claim 11, **characterized in that**
the program update control apparatus further includes:
a grouping section to group the plurality of programs indicated by the update instructions, which are stored in the storage section, under a predetermined standard; and
the determining section determines an updating sequence of a plurality of programs included in a specific group grouped by the grouping section.

14. The program update system recited in claim 13, **characterized in that**
the determining section also determines necessity or not of an update operation for every one of the plurality of programs included in the specific group, so as to implement only the update operation determined as necessity.

15. The program update system recited in any one of claims 11 - 14, **characterized in that**
the controlling section acquires a program, being an object of update operation, from the program server, which stores the various kinds of programs to be installed in the external terminal apparatus.

16. The program update system recited in any one of claims 11 - 15, **characterized in that**
the controlling section commences the program update operations at a predetermined timing.

17. The program update system recited in claim 16, **characterized in that**
the program update control apparatus further includes:
a data acquisition section to acquire data in regard to a program update timing from the image forming apparatus; and
the predetermined timing is determined, based on the data in regard to the program update timing, acquired by the data acquisition section.

18. The program update system recited in claim 17, **characterized in that**
the data in regard to the program update timing represent an unavailable time period of the image forming apparatus, serving as a spare time of the image forming apparatus.

19. The program update system recited in any one of claims 11 - 18, **characterized in that**
the update instructions to be received by the receiving section are transmitted from the designation terminal device other than the image forming apparatus in which the program update operations are to be conducted.

20. The program update system recited in any one of claims 11 - 19, **characterized in that**
the controlling section collectively implements the program update operations to be conducted in the image forming apparatus.
